(19) Europäisches Patentamt
European Patent Office
Office européen des brevets

(11) Veröffentlichungsnummer : **0 137 990**
**B1**

# (12) EUROPÄISCHE PATENTSCHRIFT

(45) Veröffentlichungstag der Patentschrift : **03.12.86**

(51) Int. Cl.⁴ : **H 01 M 4/90**, H 01 M 8/20

(21) Anmeldenummer : **84110159.5**

(22) Anmeldetag : **25.08.84**

(54) **Elektrochemische Redoxzelle.**

(30) Priorität : **17.09.83 DE 3333650**

(43) Veröffentlichungstag der Anmeldung : **24.04.85 Patentblatt 85/17**

(45) Bekanntmachung des Hinweises auf die Patenterteilung : **03.12.86 Patentblatt 86/49**

(84) Benannte Vertragsstaaten : **AT BE CH DE FR GB IT LI LU NL SE**

(56) Entgegenhaltungen :
**WO-A-80 /012 21**
**US-A- 4 146 458**
**US-A- 4 382 116**
**GMELINS Handbuch der anorganischen Chemie, 8. Auflage, System Nr. 38 "THALLIUM", 1940 VERLAG CHEMIE, BERLIN, Seiten 127, 128**

(73) Patentinhaber : **Fraunhofer-Gesellschaft zur Förderung der angewandten Forschung e.V.**
**Leonrodstrasse 54**
**D-8000 München 19 (DE)**

(72) Erfinder : **Hollax, Eberhard, Dr. Dipl.-Ing.**
**Sundgauallee 59**
**D-7800 Freiburg (DE)**
Erfinder : **Cheng, De-shu, Prof.**
**Inst. of Photographic Chemistry Academia Sinica**
**Beijing (CN)**

(74) Vertreter : **Rackette, Karl, Dipl.-Phys. Dr.-Ing**
**Kaiser-Joseph-Strasse 179 Postfach 1310**
**D-7800 Freiburg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft eine elektrolytische Redoxzelle mit einem von einer salzsauren Anodenflüssigkeit durchströmten, eine Anodenelektrode und wenigstens einen Katalysator zur elektrokatalytischen Beschleunigung der Redoxvorgänge an der Anode enthaltenden Anodenraum, der durch eine permselektive Ionenaustauschermembran von einem von einer salzsauren Kathodenflüssigkeit durchströmten, eine Kathodenelektrode enthaltenden Kathodenraum getrennt ist.

Eine derartige Redoxzelle ist aus der PCT-Anmeldung WO 80/01221 bekannt und enthält als Katalysatoren auf der Anode eine erste Schicht aus Kupfer, Silber oder Gold und eine zweite Schicht aus Blei oder Kadmium. Dabei wurde für die kathodische $Cr^{3+}$-Reduktion vorzugsweise $PbCl_2$ im salzsauren Elektrolyten gelöst. Es ist bekannt, daß Blei eine hohe Wasserstoffüberspannung zeigt. Es läßt sich auch feststellen, daß in Gegenwart von Blei eine katalytische Reaktionsbeschleunigung auftritt. Doch sowohl die Reaktionsbeschleunigung als auch die Wasserstoffüberspannung erwiesen sich in praktischen Zellen als unzulänglich, so daß die Nutzung der $Cr^{3+}/Cr^{2+}$-Reaktion in praktischen Redoxzellen stark erschwert ist.

Ausgehend von diesem Stand der Technik liegt der Erfindung die Aufgabe zugrunde, die Wasserstoffbildung an der Anode besser zu unterdrücken und eine höhere Belastbarkeit für die kathodische $Cr^{3+}$-Entladung zu erzielen.

Diese Aufgabe wird erfindungsgemäß dadurch gelöst, daß statt des bisherigen Katalysators Blei nunmehr Thallium als Katalysator verwendet wird. Dabei ergibt sich eine Verbesserung der Belastbarkeit um 30 % und eine Verringerung der Wasserstoffabscheidung um 10 %. Bei einem zweckmäßigen Ausführungsbeispiel der Erfindung ist die Anodenelektrode mit einer Thalliumschicht überzogen. Diese kann direkt erzeugt werden oder auch dadurch, daß die Anodenflüssigkeit ein Thalliumsalz enthält, welches beim Laden der Redoxzelle zur Abscheidung von Thallium auf der Anode führt. Als Thalliumsalz kann insbesondere Thalliumchlorid verwendet werden. Zweckmäßige Weiterbildungen der Erfindung sind in den Unteransprüchen gekennzeichnet.

In der Zeichnung ist ein Ausführungsbeispiel der Erfindung dargestellt. Es zeigen :

Figur 1 den Aufbau der Redoxzelle in einer schematischen Darstellung und

Figur 2 durch cyklische Voltametrie aufgenommene Kurven, die den Einfluß von Blei und Thallium auf die Peakstromdichte für die $Cr^{3+}/Cr^{2+}$-Redoxreaktion und die $H_2$-Abscheidung veranschaulichen.

Der in Fig. 1 während der Entladung dargestellte Redox-Speicher besteht aus einer Redoxzelle 1 mit einem Anodenraum 2 und einem Kathodenraum 3, die durch eine permselektive Ionenaustauschermembran 4 voneinander getrennt sind.

Der Anodenraum 2 ist mit einer Anodenflüssigkeit 5 gefüllt und steht über Leitungen 6 und 7 mit einem Vorratstank 8 für die Anodenflüssigkeit 5 in Verbindung. In der Leitung 7 ist eine Pumpe 9 vorgesehen, mit deren Hilfe während des Betriebs der Redoxzelle Anodenflüssigkeit 5 aus dem Vorratstank 8 in den Anodenraum 2 gepumpt werden kann.

Der Kathodenraum 3 steht über Leitungen 10 und 11 mit einem Vorratstank 12 für die Kathodenflüssigkeit 19 in Verbindung. Mit Hilfe einer Pumpe 13 wird beim Betrieb der Redoxzelle 1 eine Förderung der Kathodenflüssigkeit 19 aus dem Vorratstank 12, der ebenso wie der Vorratstank 8 ein wesentlich größeres Volumen aufweist als die Redoxzelle 1, in den Kathodenraum 3 erreicht.

Im Kathodenraum 3 ist eine Kathode 14 angeordnet, die gegenüber der Kathodenflüssigkeit 19 inert ist. Die Kathode 14 verfügt über eine Anschlußklemme 15, die den positiven Pol der Redoxzelle 1 darstellt.

Im Anodenraum 2 ist eine Anode 16 aus einem Elektrodenkörper angeordnet, der gegenüber der elektrochemischen Reaktion mit der Anodenflüssigkeit 5 inert ist. Die Anode 16 ist mit einer Anschlußklemme 17 versehen, die den negativen Pol der Redoxzelle 1 bildet.

Zwischen der positiven Anschlußklemme 15 und der negativen Anschlußklemme 17 ist beim Entladen der Redoxzelle 1 eine Last 18 angeschlossen, die mit einem elektrischen Strom versorgt wird, der durch die Redoxreaktionen an der Kathode 14 und der Anode 16 aufrechterhalten wird.

Der Elektrodenkörper der Kathode 14 besteht aus hochporöser durchströmbarer Kohle, beispielsweise Graphitfilz. Als Trägermaterial für die Kathode 14 kann auch Aktivkohle verwendet werden. Ebenso ist es möglich, die Kathode 14 als aktivierter gebrannter Elektrodenkörper auszubilden.

Die Kathodenflüssigkeit 19, die einer der Energieträger der Redoxzelle 1 ist, besteht aus 1 m bis 2,5 m Salzsäure, die etwa 2,5 Mol/l $FeCl_2 \cdot 4\ H_2O$ enthält. In der Kathodenflüssigkeit 19 ist $Fe^{2+}/Fe^{3+}$ als Redoxpaar gelost. Statt der Verwendung von Eisenchlorid für die Kathodenflüssigkeit 19 kann auch Vanadiumchlorid oder Manganchlorid verwendet werden.

Beim in Fig. 1 dargestellten Entladevorgang findet folgender Prozess an der Kathode 14 statt :

$$Fe^{3+} + e \longrightarrow Fe^{2+}$$

Bei der Ladung findet an der Kathode 14 der umgekehrte Vorgang bezüglich des Redoxpaares $Fe^{2+}/Fe^{3+}$ statt.

Der Anodenraum 2 stellt den Chrom III/II-Reaktionsraum der Redoxzelle 1 dar. Die Anodenflüssigkeit 5 liefert das Redoxpaar $Cr^{3+}/Cr^{2+}$ und enthält wie die Kathodenflüssigkeit 1 m bis 2,5 m, vorzugsweise

2 m Salzsäure. Bei einer Redoxzelle 1 vom Eisen-Chrom-Typ enthält die Anodenflüssigkeit 5 Chrom-III-Chlorid. Jedoch ist es auch möglich, eine Redoxzelle 1 auf der Basis von Titanchlorid im Elektrolyten der Anodenflüssigkeit 5 aufzubauen. Bei dem in Fig. 1 dargestellten Entladevorgang findet an der Anode 16 folgende Reaktion statt :

$$Cr^{2+} \longrightarrow Cr^{3+} + e$$

Da diese Reaktion beim Ladevorgang umgekehrt verläuft, ergibt sich für die Redoxzelle 1 vom Eisen-Chrom-Typ folgende Gesamtreaktion :

$$Cr^{2+} + Fe^{3+} \underset{\text{Laden}}{\overset{\text{Entladen}}{\rightleftharpoons}} Cr^{3+} + Fe^{2+}$$

Während die Eisen-Redoxreaktion an der Kathode 14 relativ reversibel abläuft, ist die $Cr^{3+}/Cr^{2+}$-Reaktion an der Anode 16 beim Lade- und Entladevorgang stark gehemmt. Hinzu kommt, daß während der kathodischen $Cr^{3+}$-Reduktion im Potentialbereich von —600 bis —700 mV gegen die gesättigte Kalomelelektrode eine beträchtliche Wasserstoffbildung auftritt. Aus diesem Grunde ist die Anode 16, deren Elektrodenkörper grundsätzlich den gleichen Aufbau wie der Elektrodenkörper der Kathode 14 hat, zusätzlich mit katalytischen Überzügen zur elektrolytischen Beschleunigung der Redoxvorgänge versehen.

Um den Entladevorgang der Redoxzelle 1 günstig zu beeinflussen, kann der Elektrodenkörper der Anode 16 vor dem Einbau in die Redoxzelle 1 mit einem Edelmetallkatalysator durch Vakuumimprägnierung imprägniert werden. Als Katalysatoren kommen insbesondere Gold, Silber oder Kupfer in Frage. Ein katalytischer Überzug kann auch erhalten werden, indem eine wässrige Goldchloridlösung über die gesamte Elektrode hinwegverteilt wird. Eine andere Möglichkeit zur Herstellung eines katalytischen Gold-Überzuges besteht darin, der Anodenflüssigkeit 5 Tetrachlorogold-III-Säure zuzufügen.

Um beim Ladevorgang die Wasserstoffbildung an der Anode 16 möglichst weitgehend zu unterdrücken und um eine hohe Belastbarkeit für die kathodische $Cr^{3+}$-Entladung zu erzielen, wird erfindungsgemäß Thallium als Katalysator eingesetzt. Dabei kann so vorgegangen werden, daß der Elektrodenkörper der Anode 16 nach der Edelmetallimprägnierung durch Vakuumimprägnierung mit einem Thalliumsalz, beispielsweise Thalliumchlorid, imprägniert wird. Es ist auch möglich, Thalliumchlorid auf die Oberfläche des Elektrodenkörpers aufzutragen und Thallium durch Erhitzung auf 120 °C abzuscheiden.

Eine andere Möglichkeit, eine katalytische Thalliumschicht auf dem Elektrodenkörper der Anode 16 zu erzeugen besteht darin, Thalliumchlorid in der Anodenflüssigkeit 5 vor dem Laden der Redoxzelle 1 zu lösen und es dem Thallium, das anodisch aufgelost wird, zu gestatten, sich beim Laden der Redoxzelle 1 auf der Anode 16 niederzuschlagen.

Es ist auch möglich, durch Katalysatorgemische von Thalliumsalzen mit Edelmetallsalzen sowohl einen katalytischen Edelmetallüberzug als auch einen katalytischen Thalliumüberzug zu erzeugen. Das Thallium als Katalysator wird dann während des Ladeprozesses auf der Anode 16 abgeschieden und während des Entladevorgangs wieder aufgelöst. Als Anodenflüssigkeit 5 kann ein Elektrolyt folgender Zusammensetzung verwendet werden :

$$0{,}5\text{-}3{,}0 \text{ m } CrCl_3 \cdot 6\ H_2O$$
$$1\text{-}2{,}5 \text{ m } HCl$$
$$1\text{-}9 \cdot 10^{-4} \text{ m } TlCl$$
$$4{,}5 \cdot 10^{-7} \text{ m } HAuCl_4 \cdot 4\ H_2O$$

Vorzugsweise ist die Zusammensetzung des Elektrolyten wie folgt :

$$2{,}5 \text{ m } CrCl_3 \cdot 6\ H_2O$$
$$2 \text{ m } HCl$$
$$4 \cdot 10^{-4} \text{ m } TlCl$$
$$4{,}5 \cdot 10^{-7} \text{ m } HAuCl_4 \cdot 4\ H_2O$$

Wie oben bereits erwähnt, wird weder der Elektrodenkörper der Kathode 14 noch der Elektrodenkörper der Anode 16 beim elektrochemischen Prozess umgesetzt. Aus Fig. 1, in der die Verhältnisse bei der Entladung der Redoxzelle 1 dargestellt sind, ergibt sich im Hinblick auf die oben erwähnte Reaktionsgleichung für die Gesamtreaktion, daß die Verhältnisse beim Laden der Redoxzelle 1 genau umgekehrt sind. Dabei bewirkt das auf der Anode 16 abgeschiedene Thallium, daß die Belastbarkeit der Redoxzelle 1 gegenüber der bekannten Redoxzelle mit Bleikatalysator um etwa 30 % steigt und die Wasserstoffabscheidung sich um 10 % vermindert.

In Fig. 2 wird dieser Effekt anhand von zwei Voltamogrammen veranschaulicht, die den Einfluß von Blei und Thallium auf die Peakstromdichte für die $Cr^{3+}/Cr^{2+}$-Redoxreaktion und die $H_2$-Abscheidung

bei einer Abtastgeschwindigkeit von 100 mV/sek mit $N_2$-Spülung während 30 Minuten bei 25 °C und einer Graphit-Arbeitselektrode zeigen. Die Kurven 1 und 2 wurden mit einem Elektrolyten mit Bleichlorid bzw. Thalliumchlorid in einer Konzentration von 3,6 bzw. $4 \cdot 10^{-4}$ Mol/l aufgenommen. Es zeigt sich bis zu einem Potential von etwa —900 mV gegen die gesättigte Kalomelelektrode in beiden Fällen praktisch kein Wasserstoffabscheidungspeak.

Ein Vergleich der Kurven 3 (Bleichloridzusatz) und 4 (Thalliumchloridzusatz) für eine Lösung von 1 Mol/l Chrom-III-Chlorid in 1 m HCl zeigt die wesentlich stärkere Reaktionsbeschleunigung durch Thalliumchlorid gegenüber Bleichlorid.

Ein Wasserstoffbildungspeak ist bei TlCl-Anwesenheit bis zu —900 mV gegen die gesättigte Kalomelelektrode nicht vorhanden. Eine Optimierung der TCl-Konzentration ergab als günstigsten Wert $6{,}5 \cdot 10^{-4}$ Mol/l.

**Patentansprüche**

1. Elektrochemische Redoxzelle mit einem von einer salzsauren Anodenflüssigkeit durchströmten, eine Anodenelektrode und wenigstens einen Katalysator zur elektrokatalytischen Beschleunigung der $Cr^{3+}/Cr^{2+}$-Redoxvorgänge an der Anode enthaltenden Anodenraum, der durch eine permselektive Ionenaustauschermembran von einem von einer salzsauren Kathodenflüssigkeit durchströmten, eine Kathodenelektrode enthaltenden Kathodenraum getrennt ist, dadurch gekennzeichnet, daß der Katalysator Thallium ist.

2. Redoxzelle nach Anspruch 1, dadurch gekennzeichnet, daß die Anodenelektrode (16) mit einer Thalliumschicht überzogen ist.

3. Redoxzelle nach Anspruch 1, dadurch gekennzeichnet, daß die Anodenflüssigkeit (5) ein Thalliumsalz enthält.

4. Redoxzelle nach Anspruch 3, dadurch gekennzeichnet, daß das Thalliumsalz Thalliumchlorid ist.

5. Redoxzelle nach Anspruch 4, dadurch gekennzeichnet, daß die Konzentration des Thalliumchlorid in der Anodenflüssigkeit (5) zwischen $1 \cdot 10^{-4}$ Mol/l und $9 \cdot 10^{-4}$ Mol/l liegt.

6. Redoxzelle nach Anspruch 5, dadurch gekennzeichnet, daß die Anodenflüssigkeit aus

$$2{,}5 \text{ m } CrCl_3 \cdot 6\ H_2O$$
$$2 \text{ m } HCl$$
$$4 \cdot 10^{-4} \text{ m } TlCl \text{ und}$$
$$4{,}5 \cdot 10^{-7} \text{ m } HAuCl_4 \cdot 4\ H_2O$$

zusammengesetzt ist.

**Claims**

1. An electrochemical redox cell having an anode compartment through which flows a hydrochloric anode liquid and which contains an anode electrode and at least one catalyst for the electrocatalytic acceleration of the $Cr^{3+}/Cr^{2+}$ redox processes at the anode, and which is separated by a permselective ion-exchange membrane from a cathode compartment through which flows a hydrochloric cathode liquid and which contains a cathode electrode, characterized in that the catalyst is thallium.

2. A redox cell as in Claim 1, characterized in that the anode electrode (16) is coated with a layer of thallium.

3. A redox cell as in Claim 1, characterized in that the anode liquid (5) contains a thallium salt.

4. A redox cell as in Claim 3, characterized in that the thallium salt is thallium chloride.

5. A redox cell as in Claim 4, characterized in that the concentration of the thallium chloride in the anode liquid (5) lies between $1 \cdot 10^{-4}$ mole/l and $9 \cdot 10^{-4}$ mole/l.

6. A redox cell as in Claim 5, characterized in that the anode liquid is composed of :

$$2.5 \text{ m } CrCl_3 \cdot 6\ H_2O$$
$$2 \text{ m } HCl$$
$$4 \cdot 10^{-4} \text{ m } TlCl \text{ and}$$
$$4.5 \cdot 10^{-7} \text{ m } HAuCl_4 \cdot 4\ H_2O$$

**Revendications**

1. Pile à oxydo-réduction électrochimique, comportant un compartiment d'anode par lequel passe un liquide d'anode chlorhydrique, contenant une électrode constituant une anode et au moins un catalyseur destiné à accélérer électrocatalytiquement les réactions d'oxydo-réduction $Cr^{3+}/Cr^{2+}$ ayant

lieu à l'anode, qui est séparé par une membrane échangeuse d'ions à perméabilité sélective d'un compartiment de cathode par lequel passe un liquide de cathode chlorhydrique, contenant une électrode constituant une cathode, caractérisée en ce que le catalyseur est le thallium.

2. Pile à oxydo-réduction selon la revendication 1, caractérisée en ce que l'électrode (16) constituant l'anode est recouverte d'une couche de thallium.

3. Pile à oxydo-réduction selon la revendication 1, caractérisée en ce que le liquide d'anode (5) renferme un sel de thallium.

4. Pile à oxydo-réduction selon la revendication 3, caractérisée en ce que le sel de thallium est le chlorure de thallium.

5. Pile à oxydo-réduction selon la revendication 4, caractérisée en ce que la concentration en chlorure de thallium du liquide d'anode (5) est comprise entre $1 \cdot 10^{-4}$ mole/l et $9 \cdot 10^{-4}$ mole/l.

6. Pile à oxydo-réduction selon la revendication 5, caractérisée en ce que le liquide d'anode se compose de :

2,5 m $CrCl_3$, 6 $H_2O$ ;
2 m HCl ;
$4 \cdot 10^{-4}$ m TlCl, et
$4{,}5 \cdot 10^{-7}$ m $HAuCl_4$, 4 $H_2O$.

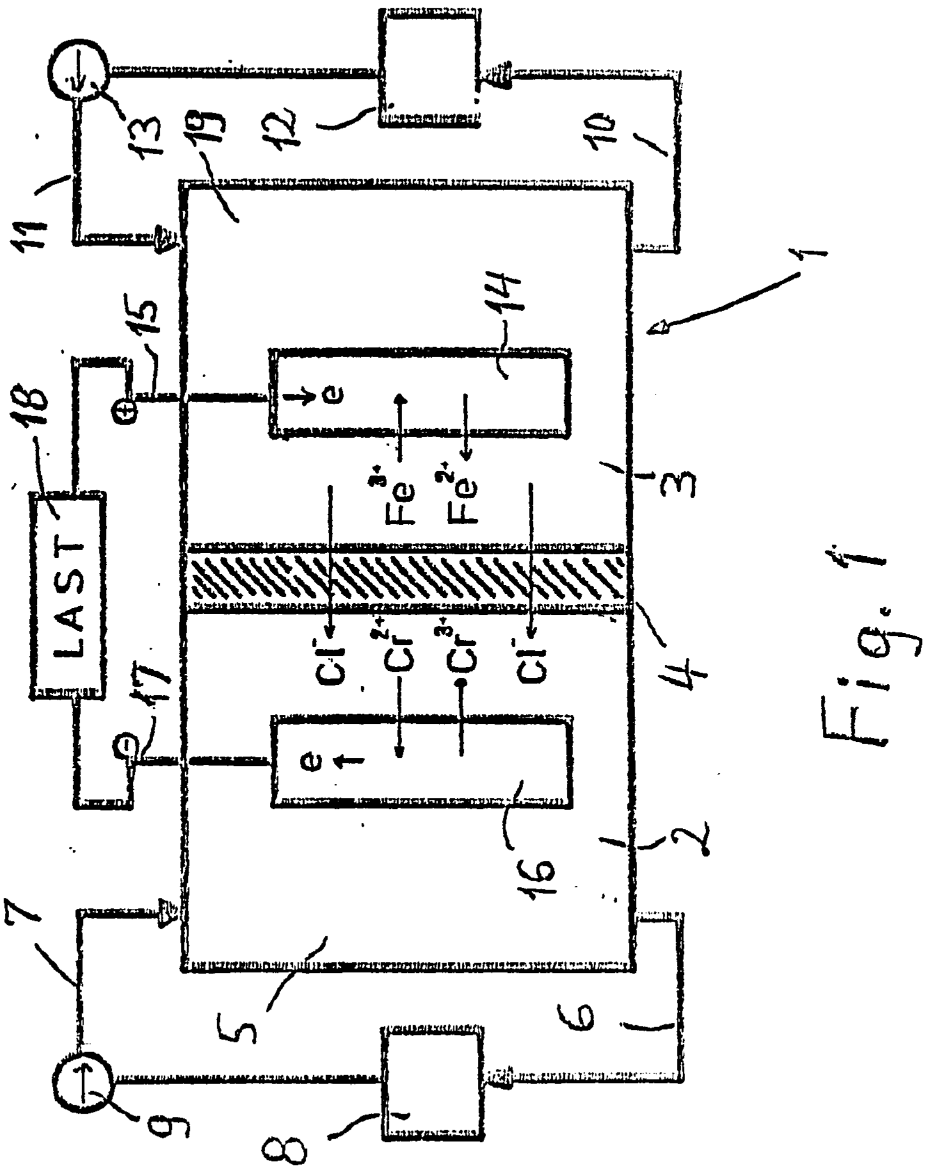

LAST
e
e
$Fe^{3+}$
$Fe^{2+}$
$Cl^-$
$Cr^{2+}$
$Cr^{3+}$
$Cl^-$
1
2
3
4
5
6
7
8
9
10
11
12
13
14
15
16
17
18
19


Fig. 1

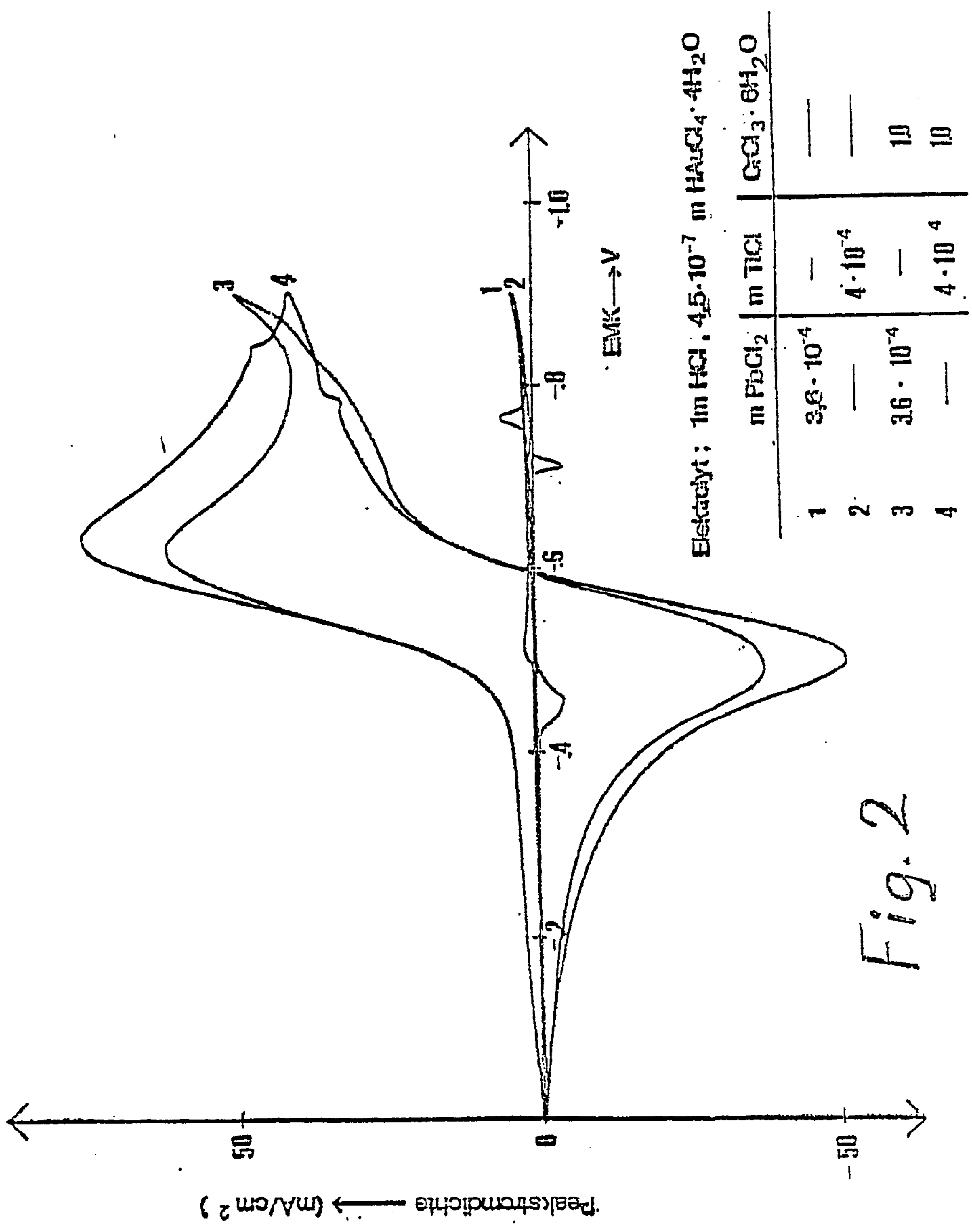


| | m PbCl₂ | m TlCl | CrCl₃ · 6H₂O |
|---|---|---|---|
| 1 | 3,6 · 10⁻⁴ | — | — |
| 2 | — | 4 · 10⁻⁴ | — |
| 3 | 3.6 · 10⁻⁴ | — | 1.0 |
| 4 | — | 4 · 10⁻⁴ | 1.0 |

Fig. 2